# EUROPÄISCHE PATENTSCHRIFT

(11) **EP 1 263 150 B1**
(45) Veröffentlichungstag und Bekanntmachung des Hinweises auf die Patenterteilung: **19.05.2004**
(21) Anmeldenummer: 02010521.9
(22) Anmeldetag: 10.05.2002
(51) Int. Cl.: H04B 3/54, H04Q 7/22

(54) **Daten-Übertragungssystem mit einer lokalen Bake**
Data transmission system with a local beacon
Système de transmission de données avec une balise locale

(30) Priorität: 01.06.2001 DE 10126947
(43) Veröffentlichungstag der Anmeldung: 04.12.2002
(73) Patentinhaber: DLR Deutsches Zentrum für Luft- und Raumfahrt e.V., 51147 Köln (DE)
(72) Erfinder: Angermann, Michael, Dipl.-Ing., 82166 Gräfelfing (DE); Steingass, Alexander, Dipl.-Ing., 82205 Gilching (DE); Robertson, Patrick, Dr., 82541 Ammerland (DE)
(74) Vertreter: von Kirschbaum, Albrecht, Dipl.-Ing.

(56) Entgegenhaltungen:
- WO-A-94/11967
- DE-A- 19 820 760
- DE-A- 19 940 651
- GB-A- 2 201 865

## Beschreibung

Die Erfindung bezieht sich auf ein Daten-Übertragungssystem mit einer lokalen Bake, die auf der einen Seite mit steuernden und/oder Informationen übermittelnden Infrastruktur-Einrichtungen, beispielsweise einem zentralen Diensteserver oder dem Internet, und/oder mit einer oder mehreren weiteren lokalen Baken in Kommunikationsverbindung steht und die auf der anderen Seite zur drahtlosen Kommunikationsverbindung mit einem oder mehreren, sich in ihrer Umgebung befindenden Endgeräten eine kombinierte Sende-/Empfangseinrichtung oder in besonderen Fällen nur eine reine Sendeeinrichtung enthält und die in, an oder an der Stelle einer elektrischen Beleuchtungsvorrichtung angeordnet ist.

Aus DE 199 40 651 A1 und DE 198 20 760 A1 sind lokale Einrichtungen zum Empfangen und/oder Senden von Kommunikationsdaten bekannt, die in eine vorhandene Beleuchtungsinfrastruktur integriert sind. Dabei kann entsprechend DE 199 40 651 A1 die Einrichtung einem Leuchtmittel, also z.B. einer Glühlampe, zugeordnet, in diesem untergebracht oder in einem zwischen dem Leuchtmittel und dessen Fassung vorgesehenen Zwischenteil angeordnet sein. Die aus DE 198 20 760 A1 bekannten Einrichtungen sind zu einem Breitband-Kommunikationssystem gehörende Basisstationen, die in einer Kommunikationszelle mit Kommunikationsendgeräten, z.B. Schnurlos-Telefonen, kommunizieren können.

Die Basisstationen werden in Glühlampenfassungen eingeschraubt, sind an ein Stromversorgungsnetz angeschlossen und zur Breitband-Datenübertragung mit anderen Basisstationen und/oder einer Steuereinrichtung über das Stromversorgungsnetz verbunden. Die drahtlose Datenübertragung zwischen einer Basisstation und sich in deren Zelle aufhaltenden Kommunikationsendgeräten erfolgt dort vorzugsweise über Infrarot-Strahlung, kann prinzipiell aber auch über Funk, insbesondere im Frequenzbereich oberhalb von 400 MHz und typischerweise bis 100 GHz ausgeführt werden.

Bei allen diesen bekannten, in einer vorhandenen Beleuchtungsinfrastruktur integrierten Einrichtungen zum Empfangen und/oder Senden von Kommunikationsdaten handelt es sich um Formen eines datentransparenten Repeaters (Transceiver, Transponder), in denen also keinerlei Informationsverarbeitung oder -veränderung stattfindet sowie Daten und Informationen nicht gespeichert werden.

Verbindungen zur Datenübertragung - sowohl drahtlos als auch draht- oder kabelgebunden - verursachen Kosten, sind oft störenden Verzögerungen unterworfen und häufig unzuverlässig. Mit zunehmender Übertragungsweglänge werden diese Effekte tendenziell größer, ebenso mit anwachsender Anzahl der Nutzer der Datenverbindung. Es ist daher anzustreben, eine Übertragung über derartige Verbindungen zu minimieren. Beim angegebenen bekannten Stand der Technik ist vorgesehen, daß die in einer Beleuchtungsinfrastruktur, insbesondere in oder anstatt einem Leuchtmittel integrierten Einrichtungen (Baken) zum Empfangen und/oder Senden von Daten ausschließlich als Transponder arbeiten.

Der Erfindung liegt die Aufgabe zu Grunde, ein Daten-Übertragungssystem mit einer lokalen, in einer Beleuchtungsstruktur integrierten Bake, die eine kombinierte Sende-/Empfangseinrichtung oder in besonderen Fällen nur eine reine Sendeeinrichtung enthält, so auszubilden, daß Übertragungen von den Endgeräten über drahtlose Verbindungen (z.B. Mobilfunkverbindungen) und/oder drahtgebundene Verbindungen (z.B. Wählverbindungen) mit den Infrastruktur-Einrichtungen minimiert werden, so daß sich ein geringerer Kostenaufwand, so gut wie keine störenden Verzögerungen und eine höhere Zuverlässigkeit und dies auch bei zunehmenden Übertragungsweglängen und anwachsender Nutzeranzahl ergeben.

Gemäß der Erfindung, die sich auf ein Daten-Übertragungssystem der eingangs genannten Art bezieht, wird diese Aufgabe dadurch gelöst, dass die lokale Bake mit einem die drahtlos zu übertragenden Daten betreffenden, in intelligenter Weise betriebenen Modul versehen ist, der aus einem Speicher und einer Verarbeitungseinheit besteht, dass der Speicher so ausgebildet ist, dass er Informationen vorhält, so dass diese Informationen dann mehrfach an mit einem passenden Endgerät ausgerüstete Nutzer abgegeben werden können, ohne jedes Mal von den Infrastruktur-Einrichtungen eingeholt werden zu müssen, und dass die Verarbeitungseinheit so ausgebildet ist, dass bestimmte Verarbeitungsvorgänge, die sonst in einer zentralen Verarbeitungeinheit der Infrastruktur-Einrichtungen oder im Endgerät selber ausgeführt werden, auf die lokale Bake ausgelagert werden.

Bei der Erfindung ist erkannt worden, daß es bei vielen Anwendungen günstiger ist, Informationen auf der lokalen Bake, die eine kombinierte Sende-/Empfangseinrichtung oder für manche Fälle nur eine reine Sendeeinrichtung enthält, vorzuhalten. Diese Informationen können dann mehrfach an Nutzer, die mit einem passenden Endgerät ausgerüstet sind, abgegeben werden. Ferner können beim Daten-Übertragungssystem nach der Erfindung Verarbeitungsvorgänge auf der lokalen Bake durchgeführt werden, ohne Kosten für eine Verbindung zu einer zentralen Verarbeitungseinheit zu verursachen. Verarbeitungsvorgänge, welche auf dem Endgerät beispielsweise aufgrund eines zu hohen Batterieverbrauchs oder zu langer Verarbeitungszeit zu aufwendig sind, können so kosteneffizient auf die lokale Bake ausgelagert werden.

Gegenüber dem Stand der Technik besteht demnach zum einen der Vorteil, daß der Download der Informationen von einer Zentrale auf die Bake und dem dann mehrfachen Abruf der Informationen auf der Bake durch den Nutzer kostengünstiger als der direkte Abruf der Informationen durch die Nutzer von der Zentrale ist. Zum anderen ergibt sich der Vorteil, daß die Verzögerungen beim Informationsabruf kleiner sind.

In diesem Zusammenhang wird darauf hingewiesen, daß das Vorhalten von oft angefragten Informationen, z.B. von Webseiten im Internet, zwar an sich als sogenanntes "Caching" bekannt ist. Einheiten, welche "Caching" verrichten, sind allerdings als Datenverarbeitungsanlagen ausgeführt.

Beim Daten-Übertragungssystem nach der Erfindung ergibt sich der Vorteil, daß lokale Informationen auf der "intelligenten" lokalen Bake vorgehalten werden können, ohne jedes Mal über das Datennetzwerk angefordert werden zu müssen. Als Beispiel sei eine intelligente lokale Bake erwähnt, die bei Fahrplanänderungen diese Änderungen per Mobilfunk übermittelt bekommt und diese dann an sich in der Umgebung befindliche Endgeräte kontinuierlich oder entsprechend einem Nutzerbedarf aussenden kann. Zur "Intelligenz" gehört auch die Funktion, zu entscheiden, welche Daten und wie lange diese vorgehalten werden.

So kann z.B. beim erstmaligen Abrufen eines Datensatzes von einem Nutzer dieser Datensatz entweder sofort an diesen Nutzer ausgesendet werden, sofern der Datensatz auf der Bake gespeichert ist, oder von einer weiteren Netzwerk-Infrastruktur angefordert werden. Falls nun später ein weiterer Nutzer auf diesen Datensatz zugreifen möchte, kann dieser Datensatz sofort an den betreffenden weiteren Nutzer ausgesendet werden, sofern die Bake diesen Datensatz vorgehalten hatte. Um diese Art von Entscheidungen zu treffen, können verschiedene Algorithmen verwendet werden, z.B. die Auswertung der Zeitpunkte der vergangenen Abfragen und Verzögerungen der Datenverbindungen über das Datennetzwerk.

Die drahtlose Übertragung zwischen der lokalen Bake und den Endgeräten kann mittels Funk, z.B. Bluetooth, Wireless LAN oder DVB-T, realisiert werden, wobei dann die lokale Bake sowie die Endgeräte für den entsprechenden Funkbetrieb auszulegen sind. Die drahtlose Übertragung zwischen der lokalen Bake und den Endgeräten kann auch mittels Infrarot-Strahlung, z.B. IRDA, realisiert werden, wobei in diesem Fall die lokale Bake sowie die Endgeräte für den entsprechenden Infrarot-Betrieb auszulegen sind. ,

Das Daten-Übertragungssystem nach der Erfindung ist nicht auf Breitband-Kommunikation beschränkt, sondern läßt in vorteilhafter Weise auch Schmalband-Kommunikation zu.

Die lokale Bake kann mit steuernden und/oder Informationen übermittelnden Infrastruktur-Einrichtungen, beispielsweise einem zentralen Diensteserver oder dem Internet, und/oder mit einer oder mehreren weiteren lokalen Baken über eine Luftschnittstelle in Verbindung stehen. Die Luftschnittstelle kann in vorteilhafter Weise durch eine Mobilfunkverbindung, wie z.B. GSM oder UMTS, durch eine Wireless LAN-Verbindung oder durch eine Infrarot-Verbindung realisiert sein.

In einer Alternativmöglichkeit dazu kann die lokale Bake mit den steuernden und/oder Informationen übermittelnden Infrastruktur-Einrichtungen, beispielsweise einem zentralen Diensteserver oder dem Internet, und/oder mit einer oder mehreren weiteren lokalen Baken über eine Stromversorgungszuführungsleitung (Power Line) in uni- oder bidirektionaler Verbindung stehen. Diese Power Line-Verbindung kann in vorteilhafter Weise über das Stromnetz realisiert sein, welches die Beleuchtungsvorrichtung bzw. das Leuchtmittel mit elektrischem Strom versorgt.

Anstelle einer Power Line-Verbindung kann eine Kommunikation mit Infrastruktur-Einrichtungen auch mittels gesonderter Kabelverbindungen erfolgen, z.B. auch mittels solcher Kabelverbindungen, welche zur Steuerung der Beleuchtungsvorrichtung bzw. des Leuchtmittels eingesetzt werden.

Die an die Endgeräte zu sendenden oder mit diesen auszutauschenden Daten können auch aus/in einem/einen Speicher kommen/gehen. Lokale Informationen betreffende Daten werden zweckmäßig im Speicher der lokalen Bake vorgehalten.

Eine vorteilhafte Ausführungsform besteht darin, daß die lokale Bake in einem zur Beleuchtungsvorrichtung gehörenden Leuchtmittel, also z.B. in einer Glühbirne, einem Halogenleuchtkörper, einer Energiesparlampe oder einer Leuchtstoffröhre, integriert ist. Die lokale Bake kann auch in einer die Beleuchtungsvorrichtung bildenden Lampenanordnung integriert sein.

Die lokale Bake läßt sich erfolgreich auch in den Starter einer zur Beleuchtungsvorrichtung gehörenden Leuchtstofflampe integrieren oder in einem zwischen dem Leuchtmittel und dessen Fassung vorgesehenen Zwischenstück unterbringen.

In zweckmäßiger Weise ist die der Beleuchtungsvorrichtung dienende Stromversorgung zugleich zur Stromversorgung der lokalen Bake vorgesehen. Bei mit Unterbrechungen betriebener Beleuchtungsvorrichtung ist dann der lokalen Bake vorteilhaft ein Energiespeicher, z.B. ein Akku oder Kondensator, zugeordnet oder eine Solarzellenanordnung als zusätzliche Energiequelle zuschaltbar.

Die Verarbeitungsfunktionalität der lokalen Bake eines Daten-Übertragungssystem nach der Erfindung kann vorteilhaft Routenplanungen, Währungsumrechnungen, Reservierungen, Authentifizierungen, weitere kryptographische Operationen oder dergleichen betreffen.

Die lokale Bake kann zur Aussendung von Navigationsdaten ausgelegt werden. Zu den ausgesendeten Navigationsdaten können die gespeicherten Ortsinformationen und Umgebungspläne der lokalen Bake zählen, die sich in einem solchen besonderen Fall auch als reine Sendebake ausführen läßt, die also nur aussendet, aber keinen Empfänger besitzt. Ferner können Signale zur Richtungsfindung der Nutzer ausgesendet werden.

In vorteilhafter Weise ist die lokale Bake durch Speicherkarten oder E-PROMs, DIP-Schalter oder dergleichen vorprogrammierbar.

Gemäß einer Weiterbildung des Daten-Übertragungssystems nach der Erfindung lassen sich Maßnahmen zur Kenntlichmachung an einer eine lokale Bake enthaltenden Beleuchtungsvorrichtung vorsehen, beispielsweise durch eine besondere Farbgebung oder Musterung.

Beim Daten-Übertragungssystem nach der Erfindung lassen sich von Vorteil das so bezeichnete JTNI™-System und das so bezeichnete JAVA™-Betriebssystem anwenden.

Nachfolgend wird die Erfindung anhand von Ausführungsbeispielen erläutert. Es zeigen:
- Fig.1: schematisch die Anordnung einer lokalen Bake in einem Zwischenstück einer Lampe mit Glühbirne und alternativ in der Glühbirne selbst, und
- Fig.2: das Blockschaltbild einer in einer Beleuchtungsvorrichtung integrierten lokalen Bake eines Daten-Übertragungssystems.

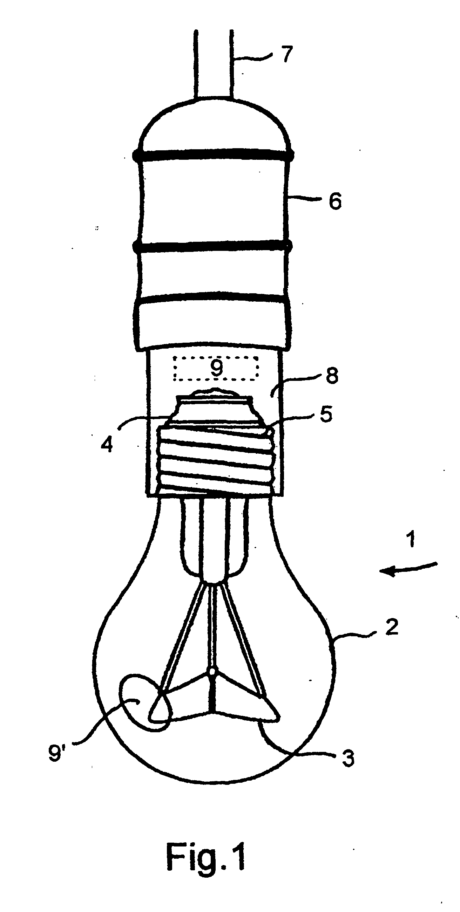

In Fig.1 ist eine in ihrer Gesamtheit mit 1 bezeichnete Glühlampe dargestellt, deren Glaskolben 2 in üblicher Weise mit indifferentem Gas, wie Argon, Krypton oder dergleichen, gefüllt ist. Im Glaskolben 2 ist ein von Tragelementen gehaltener Glühdraht 3 untergebracht. Der Glaskolben 2 ist direkt mit einem Sockel 4 verbunden, der auf seiner Außenseite ein genormtes Gewinde 5 aufweist. Im oberen Teil von Fig.1 ist eine Lampenfassung 6 dargestellt, an welche von außen elektrischer Strom über eine Stromversorgungsleitung 7 zugeführt wird.

Zwischen der Glühlampe 1 und der Lampenfassung 6 ist eine in einem Zwischenstück 8 untergebrachte und in Fig.1 schematisch durch ein gestrichelt wiedergegebenes Rechteck angedeutete lokale Sende-/Empfangseinrichtung 9 als intelligente Bake eines drahtlos arbeitenden Daten-Übertragungssystems vorgesehen.

In der in Fig.1 angedeuteten Weise läßt sich eine lokale Sende-/Empfangseinrichtung 9' eines drahtlos arbeitenden Daten-Übertragungssystems alternativ auch als intelligente Bake innerhalb des Glaskolbens 2 der Glühlampe 1 unterbringen. Die in Fig.1 wiedergegebene Lage der Sende-/Empfangseinrichtung 9' am Ende der den Glühdraht 3 tragenden Elemente ist besonders vorteilhaft, da dadurch eine direkte Stromzufuhr zur Sende-/Empfangseinrichtung 9' erreicht wird. Insbesondere bei gewendelter Ausführung des Glühdrahtes 3 kann dieser zugleich als Antenne der Sende-/Empfangseinrichtung 9' verwendet werden.

Bei ununterbrochener Einschaltung der Beleuchtung wird auch die im Zwischenstück 8 enthaltene Sende-/Empfangseinrichtung 9 bzw. die im Glaskolben 2 der Glühlampe 1 untergebrachte Sende-/Empfangseinrichtung 9' kontinuierlich mit Energie versorgt und ist somit tatsächlich ständig funktionsfähig.

Soll die Glühlampe 1 dagegen mit Unterbrechungen betrieben werden, so ist für die Sende-/Empfangseinrichtung 9 bzw. 9' entweder ein Energiespeicher z.B. in Form eines Akkumulators oder eines Kondensators erforderlich, oder aber es muß eine besondere Steuereinheit vorgesehen werden, welche Schaltfunktionen zur Sicherstellung der Stromzufuhr zur Sende-/Empfangseinrichtung 9 bzw. 9' ausübt.

Die mit der Glühlampe 1 integrierte lokale Sende-/Empfangseinrichtung 9 bzw. 9' ist mit einer die drahtlos zu übertragenden Daten betreffenden, in intelligenter Weise betriebenen Speicher- und/oder Verarbeitungsfunktionalität versehen.

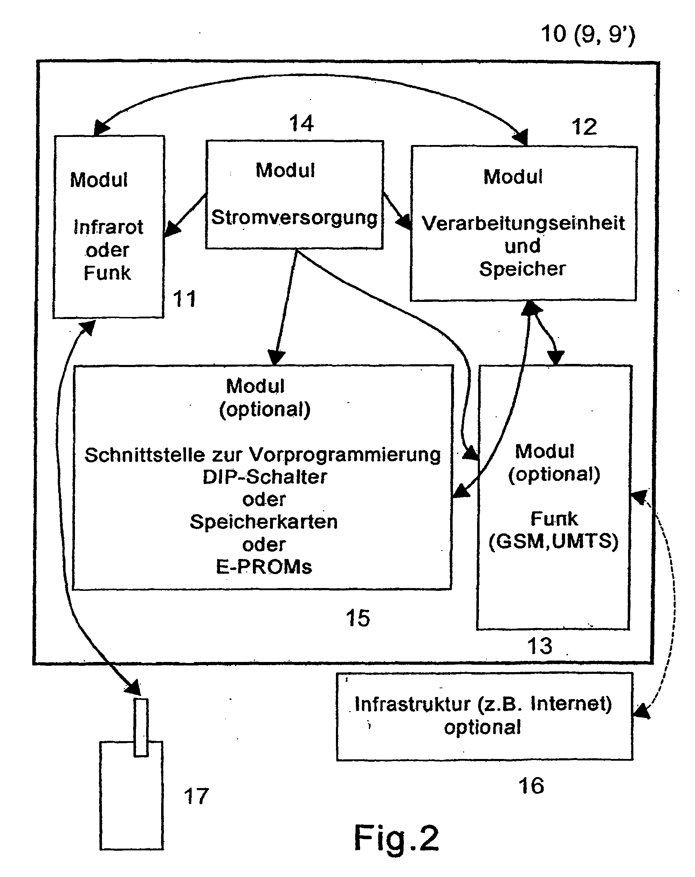

Das Blockschaltbild eines vorteilhaften Ausführungsbeispiels einer solchen, der Glühlampe 1 beigefügten lokalen Sende-/Empfangseinrichtung 9 bzw. 9' ist in Fig.2 dargestellt.

Die eine Bake 10 bildende lokale Sende-/Empfangseinrichtung 9 bzw. 9' (von Fig.1) besteht aus fünf zusammenwirkenden Modulen 11 bis 15. Über den Modul 13 kann die Bake 10 mittels einer GSM- oder UMTS-Funkverbindung mit einer äußeren Infrastruktur 16, z.B. einem zentralen Diensteserver oder dem Internet, optional kommunizieren. Im Modul 12, der aus einer Verarbeitungseinheit und einem Speicher besteht, können auszusendende oder empfangene Informationen in intelligenter Weise verarbeitet und/oder gespeichert werden.

Über den Modul 11 kommuniziert die Bake 10 dann mit einem von einem Nutzer getragenen Endgerät 17, z.B. einem Handy, mittels einer Bluetooth-Funkverbindung oder einer Infrarot-Verbindung. Der Modul 14 dient der Stromversorgung der Bake 10. Der Modul 14 selbst ist ans Stromnetz angeschlossen, wobei hierzu die Stromzuführung der Lampe verwendet wird, mit welcher die Bake 10 integriert ist. Der optionale Modul 15 bildet eine Schnittstelle zur Vorprogrammierung und kann durch DIP-Schalter, Speicherkarten oder E-PROMs realisiert werden.

Es können auch mehrere jeweils mit einer Beleuchtungsstruktur integrierte Baken 10 mittels Wireless LAN untereinander kommunizieren. Mehrere Endgeräte 17, z.B. Handys, kommunizieren in diesem Fall miteinander mittels Bluetooth-Funkverbindung zur Bake 10 und weiter von der Bake zu einer anderen Bake 10 per Wireless LAN und von dieser Bake 10 zum anderen Endgerät 17 per Bluetooth-Funkverbindung.

Nachfolgend seien noch einige Anwendungsbeispiele für Baken bildende lokale Sende-/Empfangseinrichtungen oder reine Sendeeinrichtungen im Rahmen eines drahtlos arbeitenden Daten-Übertragungssystem nach der Erfindung aufgeführt.
1. Eine Bake ist in einer Glühbirne oder Leuchtstoffröhre integriert und enthält den aktuellen Fahrplan des ÖPNVs (Öffentlicher Personen-Nahverkehr), der mittels GSM oder UMTS aktualisiert wird und durch ein Mobilfunk-Endgerät mittels Bluetooth benutzt werden kann.
2. Eine Bake ist in einer Glühbirne oder Leuchtstoffröhre integriert, wobei ihre Position in Form von Ortskoordinaten durch Ausstrahlen mittels Bluetooth bekannt gegeben wird.
3. Eine Bake ist in einer Glühbirne oder Leuchtstoffröhre integriert und führt eine Routenplanung für das mit ihr kommunizierende Kommnikationsendgerät durch.
4. Eine Bake ist in einer Glühbirne oder Leuchtstoffröhre integriert und stellt Multimediadaten, z.B. Musikdaten oder Videoclips, bereit. Die Verarbeitungsfunktionalität der Bake kann über die Vorhaltezeit der Multimediadaten entscheiden.
5. Eine Bake ist in einer Glühbirne oder Leuchtstoffröhre integriert und strahlt Werbung aus.
6. Eine Bake ist in einer in einem Restaurant angebrachten Glühbirne oder Leuchtstoffröhre integriert und hält die Speisekarte vor, kann Bestellungen aufnehmen und an die Küche weiterleiten.

### Bezugszeichenliste

- 1: Glühlampe
- 2: Glaskolben
- 3: Glühdraht
- 4: Sockel
- 5: Gewinde
- 6: Lampenfassung
- 7: Stromversorgungsleitung
- 8: Zwischenstück
- 9, 9': Lokale Bake; (Sende-/Empfangseinrichtung)
- 10: Lokale Bake
- 11 - 15: Module
- 16: Infrastruktur
- 17: Endgerät

## Patentansprüche

1. Daten-Übertragungssystem mit einer lokalen Bake (10; 9, 9'), die auf der einen Seite mit steuernden und/oder Informationen übermittelnden Infrastruktur-Einrichtungen (16), beispielsweise einem zentralen Diensteserver oder dem Internet, und/oder mit einer oder mehreren weiteren lokalen Baken in Kommunikationsverbindung steht und die auf der anderen Seite zur drahtlosen Kommunikationsverbindung mit einem oder mehreren, sich in ihrer Umgebung befindenden Endgeräten (17) eine kombinierte Sende/Empfangseinrichtung oder in besonderen Fällen nur eine reine Sendeeinrichtung enthält und die in, an oder an der Stelle einer elektrischen Beleuchtungsvorrichtung (1) angeordnet ist, **dadurch gekennzeichnet, dass** die lokale Bake (10; 9, 9') mit einem die drahtlos zu übertragenden Daten betreffenden, in intelligenter Weise betriebenen Modul (12) versehen ist, der aus einem Speicher und einer Verarbeitungseinheit besteht, dass der Speicher so ausgebildet ist, dass er Informationen vorhält, so dass diese Informationen dann mehrfach an mit einem passenden Endgerät (17) ausgerüstete Nutzer abgegeben werden können, ohne jedes Mal von den Infrastruktur-Einrichtungen (16) eingeholt werden zu müssen, und dass die Verarbeitungseinheit so ausgebildet ist, dass bestimmte Verarbeitungsvorgänge, die sonst in einer zentralen Verarbeitungseinheit der Infrastruktur-Einrichtungen oder im Endgerät selber ausgeführt werden, auf die lokale Bake ausgelagert werden.

2. Daten-Übertragungssystem nach Anspruch 1, **dadurch gekennzeichnet, dass** zur "Intelligenz" der Bake (10; 9, 9') die Funktion gehört, zu entscheiden, welche Daten und wie lange diese vorgehalten werden.

3. Daten-Übertragungssystem nach Anspruch 2, **dadurch gekennzeichnet, daß** zum Treffen derartiger Entscheidungen verschiedene Algorithmen vorgesehen sind, die z.B. die Auswertung der Zeitpunkte der vergangenen Abfragen und Verzögerungen der Datenverbindungen über die Datennetzwerk-Infrastruktur betreffen.

4. Daten-Übertragungssystem nach Anspruch 1, **dadurch gekennzeichnet, daß** die Kommunikationsverbindung zwischen der lokalen Bake (10) und den steuernden und/oder Informationen übermittelnden Infrastruktur-Einrichtungen (16) durch eine Luftschnittstelle gebildet ist.

5. Daten-Übertragungssystem nach Anspruch 4, **dadurch gekennzeichnet, daß** die Luftschnittstelle durch eine Mobilfunkverbindung, wie z.B. GSM oder UMTS, realisiert ist.

6. Daten-Übertragungssystem nach Anspruch 4, **dadurch gekennzeichnet, daß** die Luftschnittstelle durch eine Wireless LAN-Verbindung realisiert ist.

7. Daten-Übertragungssystem nach Anspruch 4, **dadurch gekennzeichnet, daß** die Luftschnittstelle durch eine Infrarot-Verbindung realisiert ist.

8. Daten-Übertragungssystem nach Anspruch 1, **dadurch gekennzeichnet, daß** die Kommunikationsverbindung zwischen der lokalen Bake (10) und den steuernden und/oder Informationen übermittelnden Infrastruktur-Einrichtungen (16), beispielsweise einem zentralen Diensteserver oder dem Internet, und/oder mit einer oder mehreren weiteren lokalen Baken über eine Stromversorgungszuführungsleitung (Power Line) in uni- oder bidirektionaler Verbindung gebildet ist.

9. Daten-Übertragungssystem nach Anspruch 8, **dadurch gekennzeichnet, daß** die Power Line-Verbindung über das Stromnetz realisiert ist, welches die Beleuchtungsvorrichtung bzw. das Leuchtmittel (1) mit elektrischem Strom versorgt.

10. Daten-Übertragungssystem nach Anspruch 1, **dadurch gekennzeichnet, daß** die Kommunikationsverbindung zwischen der lokalen Bake (10) und den steuernden und/oder Informationen übermittelnden Infrastruktur-Einrichtungen (16), beispielsweise einem zentralen Diensteserver oder dem Internet, über gesonderte Kabelverbindungen in uni- oder bidirektionaler Verbindung gebildet ist.

11. Daten-Übertragungssystem nach Anspruch 10, **dadurch gekennzeichnet, daß** die Kommunikationsverbindung mittels solcher Kabelverbindungen vorgenommen ist, welche zur Steuerung der Beleuchtungsvorrichtung (1) bzw. des Leuchtmittels eingesetzt werden.

12. Daten-Übertragungssystem nach Anspruch 1, **dadurch gekennzeichnet, daß** die an die Endgeräte (17) zu sendenden oder mit diesen auszutauschenden Daten aus/in einem/einen Speicher (12) der lokalen Bake (10; 9, 9') kommen/gehen.

13. Daten-Übertragungssystem nach Anspruch 1, **dadurch gekennzeichnet, daß** die drahtlose Übertragung zwischen der lokalen Bake (10; 9, 9') und den Endgeräten (17) mittels Funk, z.B. Bluetooth, Wireless LAN oder DVB-T, realisiert ist und die lokale Bake sowie die Endgeräte für den entsprechenden Funkbetrieb ausgelegt sind.

14. Daten-Übertragungssystem nach Anspruch 1, **dadurch gekennzeichnet, daß** die drahtlose Übertragung zwischen der lokalen Bake (10; 9, 9') und den Endgeräten (17) mittels Infrarot-Strahlung, z.B. IRDA, realisiert ist und die lokale Bake sowie die Endgeräte für den entsprechenden Infrarot-Betrieb ausgelegt sind.

15. Daten-Übertragungssystem nach einem der vorhergehenden Ansprüche, **dadurch gekennzeichnet, daß** lokale Informationen betreffende Daten in einem Speicher (12) der lokalen Bake (10; 9, 9') vorgehalten sind.

16. Daten-Übertragungssystem nach einem der vorhergehenden Ansprüche, **dadurch gekennzeichnet, daß** die lokale Bake (10; 9, 9') in einem zur Beleuchtungsvorrichtung (1) gehörenden Leuchtmittel, also z.B. in einer Glühbirne, Energiesparlampe oder Leuchtstoffröhre, integriert ist.

17. Daten-Übertragungssystem nach einem der Ansprüche 1 bis 15, **dadurch gekennzeichnet, daß** die lokale Bake (10; 9, 9') in einer die Beleuchtungsvorrichtung bildenden Lampenanordnung (1) integriert ist.

18. Daten-Übertragungssystem nach einem der Ansprüche 1 bis 15, **dadurch gekennzeichnet, daß** die lokale Bake (10; 9, 9') in den Starter einer zur Beleuchtungsvorrichtung gehörenden Leuchtstofflampe integriert ist.

19. Daten-Übertragungssystem nach einem der Ansprüche 1 bis 15, **dadurch gekennzeichnet, dass** die lokale Bake (10; 9, 9') in einem zwischen dem Leuchtmittel (1) und dessen Fassung (6) vorgesehenen Zwischenstück (8) untergebracht ist.

20. Daten-Übertragungssystem nach einem der vorhergehenden Ansprüche, **dadurch gekennzeichnet, dass** die der Beleuchtungsvorrichtung (1) dienende Stromversorgung (7) zugleich zur Stromversorgung der lokalen Bake (10; 9, 9') vorgesehen ist.

21. Daten-Übertragungssystem nach Anspruch 20, **dadurch gekennzeichnet, dass** bei mit Unterbrechungen betriebener Beleuchtungsvorrichtung der lokalen Bake (10; 9, 9') ein Energiespeicher, z.B. ein Akkumulator oder ein Kondensator, zugeordnet oder eine Solarzellenanordnung als zusätzliche Energiequelle zuschaltbar ist.

22. Daten-Übertragungssystem nach Anspruch 1, **dadurch gekennzeichnet, dass** die Verarbeitungseinheit des Moduls (12) der lokalen Bake (10; 9, 9') Routenplanungen, Währungsumrechnungen, Reservierungen, Authentifizierungen oder weitere kryptographische Operationen betrifft.

23. Daten-Übertragungssystem nach Anspruch 1, **dadurch gekennzeichnet, dass** die lokale Bake (10; 9, 9') zur Aussendung von Navigationsdaten oder dergleichen ausgelegt ist.

24. Daten-Übertragungssystem nach Anspruch 23, **dadurch gekennzeichnet, dass** zu den ausgesendeten Navigationsdaten die gespeicherten Ortsinformationen oder Umgebungsdaten der lokalen Bake zählen.

25. Daten-Übertragungssystem nach Anspruch 23, **dadurch gekennzeichnet, daß** zu den ausgesendeten Navigationsdaten Signale zur Richtungsfindung der Nutzer zählen.

26. Daten-Übertragungssystem nach einem der vorhergehenden Ansprüche, **dadurch gekennzeichnet, daß** die lokale Bake (10; 9, 9') durch Speicherkarten oder E-PROMs, DIP-Schalter oder dergleichen (15) vorprogrammierbar ist.

27. Daten-Übertragungssystem nach einem der vorhergehenden Ansprüche, **dadurch gekennzeichnet, daß** Maßnahmen zur Kenntlichmachung an einer eine lokale Bake enthaltenden Beleuchtungsvorrichtung vorgesehen sind, beispielsweise eine besondere Farbgebung oder Musterung.

28. Daten-Übertragungssystem nach einem der vorhergehenden Ansprüche, **gekennzeichnet durch** Anwendung des so bezeichneten JINI™-Systems.

29. Daten-Übertragungssystem nach einem der Ansprüche 1 bis 27, **gekennzeichnet durch** Anwendung des so bezeichneten JAVA™-Systems.

## Claims

1. A data transmission system comprising a local beacon (10; 9, 9'), on the one side, communicating with controlling and/or information transmitting infrastructure means (16), for example a central service provider or the Internet and /or with one or several other local beacons and which, on the other side, contains a combined transmitter/receiver or in special cases a transmitter only for wireless communication with one or several terminals (17) located in its vicinity and which is positioned in, on or in place of electric lighting equipment (1), **characterized in that** the local beacon (10; 9, 9') is provided with a smart module (12) relating to the data to be transmitted wireless, which consists of a memory and a processing unit, that the memory is designed in such a way that it caches information so that said information can then be repeatedly sent to users equipped with a suitable terminal (17) without having to be fetched every time from said infrastructure means (16) and that said processing unit is designed such that certain processing actions which are otherwise carried out in a central processing unit of the infrastructure means or in the terminal itself are outsourced to the local beacon.

2. The data transmission system as set forth in claim 1, **characterized in that** the "intelligence" of the beacon (10; 9, 9') includes the function of deciding which data and how long this data will be cached.

3. The data transmission system as set forth in claim 2, **characterized in that** to make such decisions various algorithms are provided, which relate to e. g. the point in time analysis of past retrievals and delays of the data links via said data network infrastructure.

4. The data transmission system as set forth in claim 1, **characterized in that** the communications link between the local beacon (10) and the controlling and/or information transmitting infrastructure means (16) is formed by of an air interface.

5. The data transmission system as set forth in claim 4, **characterized in that** the air interface is realized by a mobile radio telephone link such as e. g. GSM or UMTS.

6. The data transmission system as set forth in claim 4, **characterized in that** the air interface is realized by a wireless LAN link.

7. The data transmission system as set forth in claim 4, **characterized in that** the air interface is realized by an infrared link.

8. The data transmission system as set forth in claim 1, **characterized in that** the communications link between the local beacon (10) and the controlling and/or information transmitting infrastructure means (16), for example a central service provider or the Internet and/or with one or several other local beacons is formed by a power line in a uni- or bi-directional link.

9. The data transmission system as set forth in claim 8, **characterized in that** the power line link is realized via the power supply system which supplies the lighting equipment and/or the illuminant (1) with current.

10. The data transmission system as set forth in claim 1, **characterized in that** the communications link between the local beacon (10) and the controlling and/or information transmitting infrastructure means (16), for example a central service provider or the Internet is formed by separate cable links in a uni- or bi-directional link.

11. The data transmission system as set forth in claim 10, **characterized in that** the communications link is effected by means of wiring such as used to control the lighting equipment (1) and/or the illuminant.

12. The data transmission system as set forth in claim 1, **characterized in that** the data to be sent to or swapped by said terminals (17) come from/go into a memory (12) of the local beacon (10; 9, 9').

13. The data transmission system as set forth in claim 1, **characterized in that** the wireless transmission between the local beacon (10; 9, 9') and the terminals (17) is realized by means of radio, e. g. Bluetooth, wireless LAN or DVB-T, and the local beacon as well as the terminals are designed for the corresponding radio communication operating mode.

14. The data transmission system as set forth in claim 1, **characterized in that** the wireless transmission between the local beacon (10; 9, 9') and said terminals (17) is realized by means of infrared radiation, e. g. IRDA and the local beacon as well as the terminals (17) are designed for the corresponding infrared operating mode.

15. The data transmission system as set forth in one of the previous claims, **characterized in that** data relating to local information are cached in a memory (12) of the local beacon (10; 9, 9').

16. The data transmission system as set forth in one of the previous claims, **characterized in that** the local beacon (10; 9, 9') is integrated in an illuminant belonging to the lighting equipment (1), i.e. for example in an incandescent bulb, energy saving lamp or fluorescent tube.

17. The data transmission system as set forth in one of claims 1 to 15, **characterized in that** the local beacon (10; 9, 9') is integrated in a lamp array (1) forming said lighting equipment.

18. The data transmission system as set forth in one of claims 1 to 15, **characterized in that** the local beacon (10; 9, 9') is integrated in the starter of a fluorescent lamp belonging to a lighting equipment.

19. The data transmission system as set forth in one of claims 1 to 15, **characterized in that** the local beacon (10; 9, 9') is accommodated in an adaptor (8) provided between the illuminant (1) and its socket (6).

20. The data transmission system as set forth in one of the previous claims, **characterized in that** the power supply (7) serving the lighting equipment (1) is simultaneously provided for the power supply of the local beacon (10; 9, 9').

21. The data transmission system as set forth in claim 20, **characterized in that** in the case of a discontinuously operated lighting equipment of the local beacon (10; 9, 9') an energy storage means, e. g. an accumulator or capacitor is assigned or a solar cell array can be hooked up as additional energy source.

22. The data transmission system as set forth in claim 1, **characterized in that** the processing unit of the module (12) of the local beacon (10; 9, 9') relates to routing, currency conversion, reservations, authentication or other cryptographic operations.

23. The data transmission system as set forth in claim 1, **characterized in that** the local beacon (10; 9, 9') is devised for transmitting navigational data or the like.

24. The data transmission system as set forth in claim 23, **characterized in that** said navigational data transmitted include the stored local information or the ambience data of the local beacon.

25. The data transmission system as set forth in claim 23, **characterized in that** direction finding signals for the users count as said transmitted navigational data.

26. The data transmission system as set forth in one of the previous claims, **characterized in that** the local beacon (10; 9, 9') is pre-programmable by memory cards or E-PROMs, DIP switches or the like (15).

27. The data transmission system as set forth in one of the previous claims, **characterized in that** measures are provided for identification of a lighting equipment containing a local beacon, for example a special colouring or pattern.

28. The data transmission system as set forth in one of the previous claims, **characterized by** the application of what is called JINI™.

29. The data transmission system as set forth in one of the previous claims, **characterized by** the application of what is called JAVA™ system.

## Revendications

1. Système de transmission de données comprenant une balise locale (10 ; 9, 9') sur l'un des côtés, avec infrastructures (16) de commande et/ou de transmission d'informations, par exemple un serveur central de prestations de services ou Internet, et/ou avec une ou plusieurs autre(s) balise(s) locale(s), et qui sur l'autre côté comprend, pour une liaison de communication sans fil avec un ou plusieurs équipement(s) terminal(aux) (17) se trouvant dans son environnement, un dispositif combiné d'émission et de réception ou, dans des cas particuliers, seulement un simple dispositif d'émission et qui est placée sur ou dans un dispositif électrique d'éclairage (1), **caractérisé en ce que** la balise locale (10 ; 9, 9') est munie d'un module exploité intelligemment, pour la transmission sans fil des données (12) qui comprend une mémoire et d'une unité d'exploitation, **en ce que** la mémoire est conçue de telle façon qu'elle fournisse des informations, de sorte que ces informations puissent ensuite être délivrées à plusieurs reprises à des utilisateurs équipés d'un dispositif terminal approprié (17) sans qu'il ne soit nécessaire de les reprendre à chaque fois par les infrastructures (16) et **en ce que** l'unité de traitement est conçue de telle façon que certaines opérations de traitement, qui sont réalisées sinon dans une unité centrale de traitement des infrastructures ou dans l'équipement terminal lui-même, soient transférées sur la balise locale.

2. Système de transmission de données selon la revendication 1, **caractérisé en ce que** la fonction consistant à décider quelles données sont mises à disposition et pendant combien de temps est incluse dans une partie "'intelligente" de la balise (10 ; 9, 9').

3. Système de transmission de données selon la revendication 2, **caractérisé en ce que** différents algorithmes, qui concernent par exemple l'exploitation des moments des demandes écoulées et des temporisations des liaisons de données par l'intermédiaire de l'infrastructure de réseau de données, sont prévus pour prendre de telles décisions.

4. Système de transmission de données selon la revendication 1, **caractérisé en ce que** la liaison de communication entre la balise locale (10) et les infrastructures (16) de commande et/ou de transmission d'informations est formée par une interface atmosphérique.

5. Système de transmission de données selon la revendication 4, **caractérisé en ce que** l'interface atmosphérique est réalisée par une liaison de radiocommunication mobile, telle que par exemple une liaison par GSM ou une liaison par UMTS.

6. Système de transmission de données selon la revendication 4, **caractérisé en ce que** l'interface atmosphérique est réalisée par une liaison LAN sans fil.

7. Système de transmission de données selon la revendication 4, **caractérisé en ce que** l'interface atmosphérique est réalisée par une liaison à infrarouge.

8. Système de transmission de données selon la revendication 1, **caractérisé en ce que** la liaison de communication entre la balise locale (10) et les infrastructures (16) de commande et/ou de transmission d'informations, par exemple un serveur central de prestations de services ou Internet, et/ou avec une ou plusieurs autre(s) balise(s) locale(s) est formée par une ligne électrique à courant porteur (Power Line) selon une liaison unidirectionnelle ou bidirectionnelle.

9. Système de transmission de données selon la revendication 8, **caractérisé en ce que** la liaison par l'intermédiaire de la ligne électrique à courant porteur est réalisée par le secteur d'alimentation électrique qui alimente le dispositif d'éclairage ou la source lumineuse (1).

10. Système de transmission de données selon la revendication 1, **caractérisé en ce que** la liaison de communication entre la balise locale (10) et les infrastructures (16) de commande et/ou de transmission d'informations, par exemple un serveur central de prestations de services ou Internet, est formée par des liaisons particulières par câbles selon une liaison unidirectionnelle ou bidirectionnelle.

11. Système de transmission de données selon la revendication 10, **caractérisé en ce que** la liaison de communication est réalisée à l'aide de liaisons par câble telles que celles qui sont utilisées pour la commande du dispositif d'éclairage (1) ou de la source lumineuse.

12. Système de transmission de données selon la revendication 1, **caractérisé en ce que** les données à émettre vers les équipements terminaux (17) ou à échanger avec ceux-ci proviennent ou vont vers une mémoire de là balise locale (10 ; 9, 9').

13. Système de transmission de données selon la revendication 1, **caractérisé en, ce que** la transmission sans fil entre la balise locale (10 ; 9, 9') et les équipements terminaux (17) est réalisée par radiocommunication, par exemple Bluetooth, LAN sans fil ou DVB-T, et **en ce que** la balise locale ainsi que les équipements terminaux sont conçus pour le mode de radiocommunication correspondant.

14. Système de transmission de données selon la revendication 1, **caractérisé en ce que** la transmission sans fil entre la balise locale (10 ; 9, 9') et les équipements terminaux (17) est réalisée à l'aide d'un rayonnement infrarouge, par exemple IRDA, et **en ce que** la balise locale ainsi que les équipements terminaux sont conçus pour le mode à infrarouge correspondant.

15. Système de transmission de données selon l'une quelconque des revendications précédentes, **caractérisé en ce que** des données concernant des informations locales sont tenues à disposition dans une mémoire (12) de la balise locale (10 ; 9, 9').

16. Système de transmission de données selon l'une quelconque des revendications précédentes, **caractérisé en ce que** la balise locale (10 ; 9, 9') est intégrée dans une source lumineuse faisant partie du dispositif d'éclairage (1), donc par exemple dans une ampoule à incandescence, dans une ampoule à faible consommation d'énergie ou dans un tube fluorescent.

17. Système de transmission de données selon l'une quelconque des revendications 1 à 15, **caractérisé en ce que** la balise locale (10 ; 9, 9') est intégrée dans un ensemble de lampes (1) formant le dispositif d'éclairage.

18. Système de transmission de données selon l'une quelconque des revendications 1 à 15, **caractérisé en ce que** la balise locale (10 ; 9, 9') est intégrée dans le démarreur d'une lampe fluorescente faisant partie du dispositif d'éclairage.

19. Système de transmission de données selon l'une quelconque des revendications 1 à 15, **caractérisé en ce que** la balise locale (10 ; 9, 9') est placée dans une pièce intermédiaire (8) prévue entre la source lumineuse (1) et sa douille (6).

20. Système de transmission de données selon l'une quelconque des revendications précédentes, **caractérisé en ce que** l'alimentation électrique (7) servant au dispositif d'éclairage (1) est en même temps prévue pour assurer l'alimentation électrique de la balise locale (10 ; 9, 9').

21. Système de transmission de données selon la revendication 20, **caractérisé en ce que**, lorsque le dispositif d'éclairage de la balise locale (10 ; 9, 9') est exploité par intermittence, un accumulateur d'énergie, par exemple une batterie rechargeable ou un condensateur, est associé à la balise locale ou un ensemble de cellules solaires peut être commuté en tant que source d'énergie d'appoint.

22. Système de transmission de données selon la revendication 1, **caractérisé en ce que** l'unité de traitement du module (12) de la balise locale (10 ; 9, 9') se rapporte à des planifications d'itinéraires, des conversions monétaires, des réservations, des authentifications ou d'autres opérations cryptographiques.

23. Système de transmission de données selon la revendication 1, **caractérisé en ce que** la balise locale (10 ; 9, 9') est conçue pour l'émission de données de navigation ou des données similaires.

24. Système de transmission de données selon la revendication 23, **caractérisé en ce que** les informations locales ou les données d'environnement de la balise locale sont incluses dans les données de navigation émises.

25. Système de transmission de données selon la revendication 23, **caractérisé en ce que** les signaux d'aide à l'orientation des utilisateurs font partie des données de navigation émises.

26. Système de transmission de données selon l'une quelconque des revendications précédentes, **caractérisé en ce que** la balise locale (10 ; 9, 9') peut être préprogrammée par des cartes de mémoires ou des mémoires à lecture seule effaçables et programmables (EPROM), des interrupteurs DIP ou des éléments similaires (15).

27. Système de transmission de données selon l'une quelconque des revendications précédentes, dans lequel des moyens d'identification comme une coloration ou une mise en forme particulière pour identifier un dispositif d'éclairage contenant une balise locale sont prévus.

28. Système de transmission de données selon l'une quelconque des revendications précédentes, compatible avec l'utilisation de système appelé JINI™.

29. Système de transmission de données selon l'une quelconque des revendications 1 à 27, compatible avec l'utilisation de système appelé JAVA™.
